# EUROPEAN PATENT SPECIFICATION

(11) **EP 4 029 906 B1**
(45) Date of publication and mention of the grant of the patent: **31.12.2025**
(21) Application number: 21210822.9
(22) Date of filing: 26.11.2021
(51) Int. Cl.: C08J 11/16, C08L 67/04

(54) **RECYCLING PROCESS FOR POLYLACTIC ACID IN WASTE STREAMS TO OBTAIN LACTIDE**
RECYCLINGPROZESS FÜR POLYMILCHSÄURE IN ABFALLSTRÖMEN ZUR HERSTELLUNG VON LACTID
PROCÉDÉ DE RECYCLAGE DE L'ACIDE POLYLACTIQUE DANS DES FLUX DE DÉCHETS POUR OBTENIR UN LACTIDE

(30) Priority: 15.12.2020 BE 202005921
(43) Date of publication of application: 20.07.2022
(73) Proprietor: Despriet Gebroeders NV, 8500 Kortrijk (BE)
(72) Inventor: Barakat, Ibrahim, 8500 Kortrijk (BE); Dejonghe, Steve, 8500 Kortrijk (BE)
(74) Representative: Brantsandpatents bv

(56) References cited:
- EP-A1- 3 409 665
- JP-A- 2010 126 491
- JP-A- H07 309 863

## Description

### TECHNICAL FIELD

The invention pertains to the technical field of methods to obtain a pure lactide stream from polylactic acid, in particular to obtain a pure lactide stream from polylactic acid in waste streams.

### BACKGROUND

Polylactic acid (PLA) is a linear, aliphatic thermoplastic polyester that is typically produced by ring opening polymerization of lactide, a cyclic di-ester of lactic acid. Lactic acid can be obtained through fermentation of renewable resources such as, for example, (corn) starch, tapioca roots, or sugarcane. This makes PLA a bio-based polymer as opposed to the now commonly used petroleum-based polymers, such as polystyrene, polyethylene, polypropylene, polyethylene terephthalate, etc. Besides the fact that it can be obtained from renewable resources, PLA also has the advantage that it can be biodegraded on a landfill, thus allowing it to be more readily disposed of after use. These two advantageous properties have led to a significant increase in the use of PLA for various applications, ranging from food packaging to biomedical products, textiles, cards, electronic appliances and others.

However, in order to make PLA suitable for various different applications, usually different types of additives are added to improve the properties of PLA. For durable, higher demanding applications, for example, the mechanical or thermal properties of PLA must systematically be enhanced to reach the expected performances. This is generally achieved by blending PLA with additives, such as for example mineral charges, impact modifiers, plasticizers and/or other polymers (bio-based or not), which negatively affects the biodegradability properties of PLA.

Moreover, from an economic and ecological viewpoint, it would be better if the PLA waste, after use, could be degraded into a product that still has some use, instead of PLA being degraded on a landfill whereby most material properties of PLA are lost. This can, for example, be achieved by depolymerizing the used polylactic acid product back into its essential building blocks, i.e. lactic acid or lactide, said building blocks can then be reused to, for example, produce new PLA or can be reused for other purposes. Seeing PLA is produced directly from lactide and not lactic acid, it would be much more practical to produce lactide from PLA instead of lactic acid, because the lactic acid still has to be converted back into lactide in order to produce new PLA. Furthermore, lactide, besides for use in the production of PLA, is also applicable in many other industries, such as the food or chemical industry.

There are a few prior art documents related to the depolymerization of polylactic acid to lactide, such as for example displayed in EP 0 264 926, EP 1 741 707 or EP 2 222 658. However, none of these prior art documents seem to address the various additives that are present in the PLA based waste streams, said additives have a large effect on the yield, purity and properties of the final lactide end-product. Indeed, the presence of impurities in the polylactic acid based waste stream will have a significant effect on the purification process of the raw lactide stream, obtained after the depolymerization of the polylactic acid based waste stream, as this raw lactide stream will comprise a broad variety of contaminants, derived from the impurities of the polylactic acid based waste stream.

Another important issue is the stereoisomeric form of the lactide. As lactic acid exists in two forms which are optical enantiomers, designated as D-lactic acid and L-lactic acid, lactide may have one of three types of optical activity depending on whether it consists of two L-lactic acid molecules, two D-lactic acid molecules or an L-lactic acid molecule and a D-lactic acid molecule combined to form the dimer. These three dimers are designated L-lactide, D-lactide and meso-lactide, respectively. A 50/50 mixture of L-lactide and D-lactide is often referred to as D, L-lactide. All these different forms also have differing stabilities and properties. Depending on the application of the lactide, it is therefore desirably to control the purification process and make it adaptable depending on the desired composition of lactide one wants to obtain.

Other chemical depolymerization processes of PLA were shown in WO 2011/029648, WO 2010/118954, and WO 2010/118955. Such processes allow the recovery of lactic acid which after purification, allows the synthesis of the PLA. These processes use hydrolysis or transesterification with alcohol for the degradation of PLA. The solution of the PLA in a lactic acid ester before the depolymerization stage allows the PLA to be depolymerized under mild conditions (low temperature). Though the degradation of PLA is effective, the reaction time is too long (approximately 24 hours, depending on the process). In addition, the final product of said processes is lactic acid and not lactide, which still has to be converted back into lactide in order to produce new PLA. Finally, such processes are batch processes, and not continuous processes. JPH07309863A, JP2010126491A and EP3409665A1 relate to methods that employ extrusion techniques to depolymerize poly lactic acid to its monomers. None of these documents disclose a method to recycle polylactic acid waste to obtain pure lactide by catalytic extrusion, in which the extrusion path is virtually infinite, and the collection of lactide is done in a plurality of traps connected to the extrusion path, such that a continuous process is achieved by performing the condensing step in some traps and the collecting step in some other traps, and continuously functionally alternating between said traps.

There remains a need in the art for an improved and broadly applicable method to produce lactide with high purity from polylactic acid based waste streams which are obtained from various resources and which contain various amounts and types of impurities, whereby the stereochemistry of the lactide end-product can be tuned to a desired composition in a continuous process.

The present invention aims to resolve at least some of the problems mentioned above.

### SUMMARY OF THE INVENTION

The present invention provides a method to produce a pure lactide stream from polylactic acid in polylactic acid based waste stream, by recycling the waste to produce the lactide.

The method according the present invention allows to produce lactide in high purity and with a desired stereochemistry from polylactic acid in polylactic acid based waste stream which may comprise a wide variety of impurities in various amounts. It is an advantage of embodiments of the present invention that high purity lactide is achieved together with high depolymerization rates and low reaction time, such as for example between 5 min and 20 min, by a number of process steps.

The method according to the present invention may comprise pre-conditioning the polylactic acid waste by melting the polylactic acid waste at or above the melting temperature of the polylactic acid, and a first vacuum extraction in a first extruder. It is an advantage of embodiments of the present invention that residual moisture and volatile organic compounds are vacuum extracted after melting the polylactic acid waste. It is further an advantage of embodiments of the present invention that the melting and the first vacuum extraction enhance degassing to avoid the effect of the moisture and the compounds on the efficiency of a subsequent catalytic extrusion and its catalyst. It is an advantage of embodiments of the present invention that the melting and the first vacuum extraction provide an optimal preparation of the waste material and therefore a higher lactide conversion rate. It is an advantage of embodiments of the present invention that different kinds of extruders may be used.

The method according to the present invention comprises subjecting the polylactic acid waste, to a catalytic extrusion over an extrusion path using a catalyst, to obtain lactide. The catalytic extrusion may take place in a second extruder i.e. may be different than the first extruder. The catalyst is injected in at least one injection point of the extrusion path. The extrusion path is virtually infinite e.g. arranged in a loop circuit or a plurality of loops wherein the waste is circulated e.g. as many times as needed e.g. according to the user. It is an advantage of embodiments of the present invention that a virtually infinite extrusion path has a high length/diameter (L/D) ratio e.g. compared to a standard straight extruder e.g. since the waste can be circulated many times in the e.g. loop circuit, so as to obtain high depolymerization rates and high process efficiency. It is an advantage of embodiments of the present invention that a loop circuit allows a simplified and compact recovery system of the lactide compared to standard extrusion line e.g. a straight line.

It is an advantage of embodiments of the present invention that different kinds of extruders may be used in e.g. the melting and the subjecting steps, for example, but not limited to, single-screw extruders or multi-screw extruders.

It is an advantage of embodiments of the present invention that the L/D ratio is virtually increased by a factor (n), wherein n is the number of loops e.g. the number of loops in which the waste will be circulated in the virtually infinite extrusion. It is an advantage of embodiments of the present invention that the L/D ratio and/or the factor (n) are adapted depending on the material properties of the waste.

The method may further comprise mixing the catalyst with the waste. It is an advantage of embodiments of the present invention that mixing ensures a proper distribution of the catalyst.

The catalyst may be a metal catalyst, for example Tin 2-ethylhexanoate Sn(Oct)₂. It is an advantage of embodiments of the present invention that Tin 2-ethylhexanoate Sn(Oct)₂ induces de-polymerization and cyclization of lactic acid to lactide dimers.

The method may further comprise mechanically discharging post-recycling residue when the process is completed. It is an advantage of embodiments of the present invention that the discharging step and subjecting step are synchronized.

It is an advantage of embodiments of the present invention that after the subjecting step, and with the high temperatures, and high vacuum, lactide vapor is obtained from the polylactic acid waste.

The method further comprises condensing the lactide vapor to obtain lactide crystals. The lactide crystals are formed in a plurality of traps. The plurality of traps may be a plurality of cylinders. It is an advantage of embodiments of the present invention that the traps are refrigerated for condensation of lactide crystals.

The method further comprises collecting lactide crystals. It is an advantage of embodiments of the present invention that the traps may be closed for collection of lactide crystals e.g. by scrapping the crystals off the traps, or may be open e.g. lactide vapor being injected into the trap, for condensation and crystallization of lactide vapor. It is an advantage of embodiments of the present invention that the traps are alternating in function so as to achieve a continuous process.

The method may further comprise providing a propeller system in the plurality of traps. It is an advantage of embodiments of the present invention that the propeller system projects the lactide vapor on the inner walls of said traps tangentially to speed up the condensation of the lactide crystals.

The method may further comprise a plurality of scrapping blades in the plurality of traps. It is an advantage of embodiments of the present invention that the lactide crystals are periodically removed from the traps by the scrapping blades.

The plurality of traps may be vertical, wherein the lactide vapor may be injected at the top of said traps. It is an advantage of embodiments of the present invention that a hermetic bag may be placed below the vertical traps for the scrapped lactide crystals to fall into.

The method may further comprise synchronizing the method steps so as to obtain a continuous process.

The method according to the present invention may further comprise preliminary steps of grinding, washing, and drying the polylactic acid waste. It is an advantage of embodiments of the present invention that the grinding, washing, and drying prepares the polylactic acid waste for recycling. It is an advantage of embodiments of the present invention that the grinding increases increase the melt kinetics while melting the waste. It is an advantage of embodiments of the present invention that washing with e.g. water in the washing unit reduces residence times, and saves energy and consumables. It is an advantage of embodiments of the present invention that the drying removes most of the water that may have a negative impact on the recycling yield.

The method may further comprise analyzing the collected lactide crystals.

The method may further comprise measuring the temperature and pressure in the system e.g. in the plurality of traps.

Further advantages of the invention and in particular of preferred embodiments, are disclosed in the detailed description below.

### DESCRIPTION OF THE FIGURES

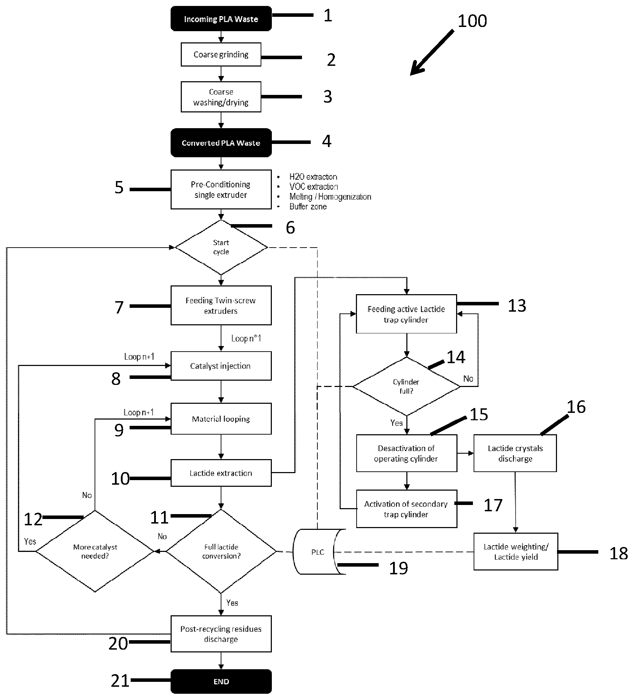

Fig. 1 shows a block diagram of a method (100) for producing lactide from polylactic acid in polylactic acid waste stream, according to embodiments of the present invention.

### DETAILED DESCRIPTION OF THE INVENTION

The present invention concerns a method to produce lactide of high purity and with a desired stereochemistry from a polylactic acid based waste stream obtained from various resources.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a contaminant" refers to one or more than one contaminant.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

With the term "polylactic acid based waste stream" as used herein, the complete flow of polylactic acid containing waste from domestic or industrial areas such as homes, businesses, institutions and manufacturing plants, is meant. This includes all post-consumer polylactic acid based products such as used packaging materials, cups, cards, bottles, containers, toys, furniture, bags, medical devices, etc., or any polylactic acid based industrial waste such as polylactic acid containing leftovers or waste formed during the production of polylactic acid or obtained during cleaning of the industrial installations used for polylactic acid production.

The term "polylactic acid" or "PLA" referred to in the present invention is a polymer having a lactic acid ester structure as a principle unit. Preferably, it is a polymer having an L- and/or D-lactic acid ester structural unit, more preferably, it is a polymer having an L- and/or D-lactic acid ester structural unit at 90% or greater of the entire units. As a component other than the lactic acid ester structural unit, a copolymer component unit derived from a lactone, a cyclic ether, a cyclic amide, a cyclic acid anhydride, etc., which are copolymerizable with lactide, may also be present. Examples of copolymer components that can be suitably used include lactones such as caprolactone, valerolactone, -butyrolactone, and p-dioxanone; cyclic ethers such as ethylene oxide, propylene oxide, butylene oxide, styrene oxide, phenylglycidyl ether, oxetane, and tetrahydrofuran; cyclic amides such as -caprolactam; and cyclic acid anhydrides such as succinic anhydride and adipic anhydride. Furthermore, it is possible to use an alcohol, a glycol, a glycerol, another polyhydric alcohol, a carboxylic acid, a polybasic carboxylic acid, a phenol, etc. as a unit that can be present in the polylactic acid as an initiator component. Specific examples of the initiator component suitably used include ethylhexyl alcohol, ethylene glycol, propylene glycol, butanediol, polyethylene glycol, polypropylene glycol, polyvinyl alcohol, glycerol, octylic acid, lactic acid, and glycolic acid. The polylactic acid according to the current invention has a molecular weight higher than 5000 g/mol.

With the term "pure lactide stream" as used herein, a lactide stream is meant containing at least 99% by weight of lactide.

"Lactide" as used herein, refers to a cyclic di-ester of lactic acid. As lactic acid exists in two forms which are optical enantiomers, designated as D-lactic acid and L-lactic acid, lactide may have one of three types of optical activity depending on whether it consists of two L-lactic acid molecules, two D-lactic acid molecules or an L-lactic acid molecule and a D-lactic acid molecule combined to form the dimer. These three dimers are designated L-lactide, D-lactide and meso-lactide, respectively. The lactide according to the current invention may comprise L-lactide, D-lactide and/or meso-lactide, in any type of combination. A 50/50 mixture of L-lactide and D-lactide is often referred to as D,L-lactide.

With the term "extrusion" as used herein, a process is meant in which a waste stream is passed through an extruder, whereby the waste stream is heated to a substantially molten state by a combination of heating elements and shear heating from the screw (or screws) of the extruder. Either a single- or a double-screw extruder may be used for the extrusion. Preferably, a twin-screw extruder is used.

The present invention provides a method to produce a pure lactide monomer stream from a polylactic acid based waste stream by recycling the latter to produce the former. The waste stream may comprise between 60-99.99% by weight of polylactic acid, the remainder of said waste stream comprising impurities. The recycling process is done by thermal reactive extrusion using a catalyst to induce the de-polymerization of PLA and the cyclization of lactic acid to lactide dimers. That is, lactide formation using units at the end of the chain by inducing the cyclization of the lactide dimers. The presence of catalyst at controlled temperature and pressure initiates the destruction of the PLA chains by a mechanism called back-biting, and allows the cyclization of lactide.

In a preferred embodiment, the method comprises a number of steps. The method may comprise pre-conditioning the polylactic acid waste by melting the polylactic acid waste at or above the melting temperature of the polylactic acid, followed by a first vacuum extraction of residual moisture and volatile organic compounds. Melting may be performed in a first extruder. Said extruder may be for example a single-screw extruder, a twin- screw extruder, or a multi-screw extruder, or any other types of extruders. Said extruder is preferably a single-screw extruder. The polylactic acid is preferably melted between 140.0°C and 300.0°C. The first vacuum extrusion is preferably at a pressure of about 100.0 mbar. The first vacuum extraction enhances degassing to avoid the effect of the moisture and the compounds on the efficiency of a subsequent catalytic extrusion and its catalyst.

In a preferred embodiment, the method comprises the step of subjecting the polylactic acid, preferably after melting and a first vacuum extraction, to a catalytic extrusion over an extrusion path using a catalyst, during which extrusion the polylactic acid is depolymerized to lactide, said lactide is extracted in its vapor phase. The extrusion path is virtually infinite. For example, the extrusion path is arranged in a loop, or in a plurality of loops, wherein the waste is circulated. For example, the extrusion path may be in a circular shape, or may be shaped as the number 8, or any similar or suitable loop shape. For example, the subjecting may be done by looping the waste in the extrusion path, e.g. as long as the process is on-going. The virtually infinite extrusion path increases length/diameter (L/D) ratio, which allows to obtain high depolymerization rates and high process efficiency e.g. having a looped extruder instead of having a very long extruder e.g. obtaining the same L/D ratio as required for the process while having a compact extruder. Different configurations or types of extruders may be used. For example, two extruders of any type connected to one another to form a loop. L/D ratio is virtually increased also by increasing the number of loops, representing a factor (n), e.g. by having a plurality of loops, or e.g. by looping the waste a plurality of times.

In a preferred embodiment, the waste material is looped in the loop circuit until the depolymerization rate is satisfactory. The looping speed may be adaptable. If a contaminant is affecting the catalyst's efficiency, additional volumes of catalyst may be injected in the loop.

In a preferred embodiment, the method may further comprise mixing the catalyst with the waste to ensure a proper distribution of the catalyst. This may be done using a mixing unit.

In a preferred embodiment, the catalytic extrusion may take place in a second extruder i.e. may be different than the first extruder. The catalyst is preferably a metal catalyst, such as for example Tin 2-ethylhexanoate Sn(Oct)₂, having for example between 0.5% wt. and 3% wt, to initiate the process. The catalytic extrusion is preferably done by applying a temperature between 160.0°C and 300.0°C, under a pressure between 10.0 mbar and 0.1 mbar, preferably at different points of the second extruder e.g. at least at one point.

In a preferred embodiment, the method may further comprise mechanically discharging post-recycling residue e.g. when the process is completed or e.g. periodically to clean the system. This step may be synchronized with other steps in the method, such that a continuous flow of the waste in the system is obtained. For example, the subjecting step may simultaneously occur with the step of mechanically discharging post-recycling residue. For example, new waste material helps to discharge the residue by pushing said residue through a discharge valve.

In a preferred embodiment, the subjecting step is done in a high temperature and under a high vacuum, together in the presence of the catalyst, so as to obtain lactide vapor from the polylactic acid waste.

In a preferred embodiment, the method further comprises condensing the lactide vapor to obtain lactide crystals. The extrusion is done in a plurality of traps connected to the extrusion path. The lactide vapor may be carried into the plurality of traps through heated pipes, for example between 90.0°C and 180.0°C. The lactide vapor may for example be collected in a chamber and then carried into the plurality of traps. The traps may be identical. The traps have inner walls, wherein the lactide crystals are condensed and eventually collected. The traps are refrigerated, for example between -10.0°C and 50.0°C.

In a preferred embodiment, the method may further comprise extracting and collecting the lactide vapor through various vacuum points on the extrusion path e.g. at least one point. Said collecting may be done through a collector structure, so as to carry the lactide vapor to the plurality of traps where the condensing step occurs. In a preferred embodiment, the method further comprises collecting lactide crystals. A continuous process is achieved by performing the condensing step in the inner walls of some traps and the collecting step in the inner walls of some other traps, and continuously alternating between the processes in each trap e.g. automatically alternating e.g. the traps are asynchronous. To collect the lactide, the trap may be brought to ambient pressure e.g. atmospheric pressure by injection of an inert gas e.g. Nitrogen. Only one process runs in a trap at a time, i.e. if the crystals are condensing, the crystals cannot be collected at the same time, and similarly if the crystals are being collected, the vapor is not injected in the trap.

In a preferred embodiment, the method may further comprise providing the plurality of traps with a propeller system that projects the lactide vapor on the inner walls of said traps tangentially so as to speed up the condensation of the lactide crystals on said walls.

In a preferred embodiment, the method may further comprise providing the plurality of traps with a plurality of scrapping blades to scrap the lactide crystals off the inner walls of said traps e.g. for collecting said crystals.

In a preferred embodiment, the plurality of traps may be vertical, wherein the lactide vapor may be injected at the top of said traps. A discharge diverter valve e.g. a butterfly valve opens and the lactide crystals is scrapped e.g. by scrapping blades. Further, a hermetic bag may be placed below the traps for the scrapped lactide crystals to fall into. The plurality of traps may for example be a plurality of cylinders.

In a preferred embodiment, the continuous alteration process enhances the de-polymerization rates and the process efficiency. Considering the variability induced by the waste's nature, the depolymerization rate is extrapolated from sensors readings (mass balance and/or spectroscopy analyses) that will ultimately determine the optimal residence time. A high rate of de-polymerization in a short time is obtained, for example between 10 min and 20 min. The collecting step may be followed by mechanically ejecting non-polylactic acid residues.

In a preferred embodiment, the method may further comprise weighting the recovered lactide crystals, and performing a mass balance calculation e.g. input polylactic acid quantities versus recovered lactide crystals.

In a preferred embodiment, the method may further comprise measuring the temperature and pressure in the system e.g. in the plurality of traps. This may be done by installing pressure and/or temperature sensors in different parts of the system, for monitoring purposes.

In a preferred embodiment, the method may further comprise analyzing the collected lactide crystals by high-performance liquid chromatography using a chiral column to determine the different ratios of D-LA, L-LA, meso-LA, and possible presence of lactic acid.

The impurities of said polylactic acid based waste stream may comprise mineral charges, pigments, plasticizers, impact modifiers, metals, titanium oxide, paper, cellulosic materials, adhesives, polymers, or combinations thereof.

In a preferred embodiment, the method may comprise preliminary steps of grinding polylactic acid waste to smaller particles to increase the melt kinetics. Each particle has a particle size between for example 3 mm and 15 mm. The preliminary steps may further comprise washing the polylactic acid waste with water, for example on a conventional plastic-recycling washing line. This reduces residence times, and saves energy and consumables. The preliminary steps may further comprise drying the polylactic acid waste, since water could have a negative impact on the recycling yield. Such drying would remove most of the water.

In a preferred embodiment, the method may further comprise synchronizing the method steps of the system e.g. synchronizing different parts of the system, so as to obtain a continuous process and sufficient loading e.g. sufficient waste and vapor flow and speed thereof in the system e.g. sufficient catalyst e.g. sufficient input and output of the system, so as to avoid overloading the system, but also avoid having e.g. low input and e.g. low catalyst levels. The method may for example comprise synchronizing the melting step, the subjecting step, the condensing step, and the collecting step. Said synchronizing may be achieved using a programmable logic controller (PLC).

In a preferred embodiment, the synchronizing is adapted so as to have the two traps asynchronous.

In a preferred embodiment, different parts of the system may be connected by valves, wherein the valves may be synchronized or asynchronized e.g. by PLC.

Further characteristics and advantages of embodiments of the present invention will be described with reference to the figures. It should be noted that the invention is not restricted to the specific embodiments shown in these figures or described in the examples, but is only limited by the claims.

Fig. 1 shows a block diagram a method (100) according to embodiments of the present invention. Some steps in the method (100) are optional. The method (100) starts with providing polylactic acid waste (1) and coarse grinding said waste (2), followed by washing and drying (3) said waste. As a result, a pre-treated waste is obtained (4). Next, the method comprises pre-conditioning (5) the waste i.e. the preliminary steps in a single-screw extruder. It is also possible to use other types of extruders. During the pre-conditioning (5), the waste is melted and vacuum extracted, and water and volatile organic compounds are removed. Said extruder also acts as a buffer zone to avoid overloading the system with the waste.

The method further comprises starting the recycling (6), by feeding (7) the waste into two twin-screw extruders arranged in a loop. After that, the method further comprises injecting a catalyst (8) i.e. subjecting the waste to a catalytic extrusion. The method further comprises looping the waste (9) in the two twin-screw extruders loop. The lactide vapor is extracted (10) from various points on the loop. The lactide vapor is fed (13) into a trap cylinder, wherein the lactide vapor is condensed i.e. condensing the lactide vapor to obtain lactide crystals. The cylinder is checked (14) whether it is full. If the cylinder is full, the vapor is not injected anymore in the cylinder (15), the traps are brought to ambient pressure, and the lactide crystals are discharged i.e. collecting (16) the lactide crystals. Another cylinder is activated (17) wherein the vapor is injected (13), and wherein the cylinder is connected to high vacuum. The cylinders are continuously alternating. For example, automatically alternating. For example, asynchronous to one another.

If the polylactic acid in the waste has been fully converted (11) into lactide vapor, the cycle ends, post-recycling residues are discharged, i.e. mechanically ejecting (20), post-recycling residues, and a new cycle starts (6) if desired, or the process finishes (21).

The lactide crystals are weighted (18). A PLC unit (19) synchronizes the method steps e.g. the steps of weighting (18), checking if the cylinder is full (14), checking if the lactide is fully converted (11), and starting (6) the recycling process, and possibly other steps in the method (100). The PLC unit may also control the catalyst injection (8).

The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### Experimental Result:

It is known that Tin 2-ethylhexanoate Sn(Oct)₂ is the catalyst reference for Lactide polymerization. The effectiveness of the Tin 2-ethylhexanoate Sn(Oct)₂ as a catalyst for de-polymerization of PLA has been well tested at 250.0°C with vacuum ~ 20mbar. The reaction time is between 20 and 30 minutes. For this reason, we chose it as a catalyst reference in our process. For similar purposes, waste PLA (post-consumer Yogurt PLA cups material) is chosen for all the following tests. Waste is from sorting of curbside collection, which typically contains yogurt remains, paper, plastic, aluminum lid, and other unidentified fractions. In the first example, the PLA waste doesn't contain paper. In the second example, the PLA waste contains paper.

### EXAMPLE 1

These tests are conducted between 250.0°C and 300.0°C, under pressure ~ 20 mbar, with different catalysis ratios between 0.5% and 1% wt./wt. A first experiment is performed to identify the influence of temperature with the ratio of Tin 2-ethylhexanoate Sn(Oct)₂. The results are shown in Table 1. During testing at 250.0°C, a low yield of LA between 29% to 51% is achieved after 5min, with 0.5% and 1% wt. Tin 2-ethylhexanoate Sn(Oct)₂, as shown in Table 1. At 300.0°C a yield of 83% after 5min is achieved using 0.5% wt. of Tin 2-ethylhexanoate Sn(Oct)₂. The performing tests at 300.0°C by using 1% wt. of Tin 2-ethylhexanoate Sn(Oct)₂ results in a violent reaction.

**Table 1: Influence of temperature and the ratio of Tin 2-ethylhexanoate Sn(Oct)₂**

| Temperature (°C) | Pressure (mbar) | Time (min) | Catalyst (%) | LA conversion (%) |
|---|---|---|---|---|
| 250 | 20 | 5 | 0.5 | 29 |
| 250 | 20 | 5 | 1 | 67 |
| 300 | 20 | 5 | 0.5 | 83 |

A second experiment is performed to identify the influence of temperature with the de-polymerization time. The results are shown in Table 2. At 250.0°C, the yield of LA is between 29% to 34% with 0.5% wt. Tin 2-ethylhexanoate Sn(Oct)₂ after 5 min and 10 min respectively. With 1% wt. of Tin 2-ethylhexanoate Sn(Oct)₂ the yield were between 51% and 67% after 5 min and 10 min, respectively.

At 300.0°C de-polymerizing the PLA yields a Lactide conversion between 83% and 91% after 5 min and 10 min, respectively using 0.5% wt. of Tin 2-ethylhexanoate Sn(Oct)₂. The best results are obtained with operating conditions at 300.0°C and 20 mbar pressure and 0.5% wt. of Tin 2-ethylhexanoate Sn(Oct)₂. The reached yields are significantly high, well above 91% after 10 min.

**Table 2: Influence of temperature and de-polymerization time**

| Temperature (°C) | Pressure (mbar) | Tim (min) | Catalyst (%) | LA conversion (%) |
|---|---|---|---|---|
| 250 | 20 | 5 | 0.5 | 29 |
| 250 | 20 | 10 | 0.5 | 34 |
| 300 | 20 | 5 | 0.5 | 83 |
| 300 | 20 | 10 | 0.5 | 91 |

### EXAMPLE 2

A third experiment is performed to identify the influence of paper waste in the PLA waste. Before starting the third experiment, we determined the paper ratio contained in the waste PLA yogurt cups and found a paper ratio about - 30% wt. The experiment was carried out at 300.0°C with 0.5% wt. catalyst ratio and vacuum ~ 20 mbar. The results are shown in Table 3. A reduce of LA conversion to 60% after 5min versus 83% without paper, and 72% after 10 min versus 91% without paper. This is explained by the fact that the lactide is trapped by the cellulosic paper fraction.

**Table 3: Influence of paper waste in the PLA waste**

| PLA waste | Time (min) | LA conversion (%) |
|---|---|---|
| Yoghurt cup with paper | 5 | 60 |
| Yoghurt cup without paper | 5 | 83 |
| Yoghurt cup with paper | 10 | 72 |
| Yoghurt cup without paper | 10 | 91 |

## Claims

1. Method (100) to recycle polylactic acid in polylactic acid waste to obtain pure lactide, said method comprising the following steps:
a. subjecting (8) the polylactic acid to a catalytic extrusion over an extrusion path to obtain lactide, said lactide is extracted in its vapor phase;
b. condensing (13) the lactide vapor to obtain lactide crystals;
c. collecting (16) the lactide crystals;
**characterized in that** the extrusion path is virtually infinite, wherein the extrusion path is arranged in a loop wherein the waste is circulated, and that the collection is done in a plurality of traps connected to the extrusion path, such that a continuous process is achieved by performing the condensing step in some traps and the collecting step in some other traps, and continuously functionally alternating between said traps.

2. Method according to claim 1, wherein the method further comprises, prior to the subjecting (8), pre-conditioning (5) the polylactic acid waste by melting said waste at or above the melting temperature of the polylactic acid, and a vacuum extraction.

3. Method according to any of the previous claims, wherein at least some traps are asynchronous with at least some other traps.

4. Method according to any of the previous claims, wherein preliminary steps are performed prior to the subjecting (8), said preliminary steps comprise:
x. grinding (2) of polylactic acid waste;
y. washing and drying (3) the polylactic acid waste;

5. Method according to any of the previous claims, wherein the catalytic extrusion is in a temperature between 160.0°C and 300.0°C and under a pressure between 10.0 mbar and 0.1 mbar.

6. Method according to any of the previous claims, wherein the method further comprises mechanically ejecting (20) non-polylactic acid residues.

7. Method according to any of the previous claims, wherein the lactide vapor is carried into the plurality of traps through heated pipes.

8. Method according to claim 7, wherein the pipes are heated to a temperature between 90.0°C and 180.0°C.

9. Method according to any of the previous claims, wherein the plurality of traps are refrigerated between -10.0°C and 50.0°C.

10. Method according to any of the previous claims, wherein collecting the lactide crystals is done by bringing the plurality of traps to ambient pressure by injection of an inert gas.

11. Method according to any of the previous claims, wherein the method further comprises providing a propeller system in the plurality of traps, said propeller system projects the lactide vapor on inner walls of said traps tangentially.

12. Method according to any of the previous claims, wherein the method further comprises providing a plurality of scrapping blades in the plurality of traps, said scrapping blades scrap the lactide crystals off the inner walls of said traps.

13. Method according to any of the previous claims, wherein the plurality of traps are vertical, wherein the lactide vapor is injected at the top of said traps, wherein at the bottom of the vertical traps, a discharge diverter valve opens and the lactide crystals is scrapped, and wherein a hermetic bag is placed below the vertical traps for the scrapped lactide crystals to fall into.

14. Method according to any of the previous claims, wherein the method further comprises synchronizing (19) different steps in the method, such that a continuous process is obtained.

## Patentansprüche

1. Verfahren (100) zum Recyceln von Polymilchsäure in Polymilchsäureabfall, um reines Lactid zu erhalten, wobei das Verfahren die folgenden Schritte umfasst:
a. Unterziehen (8) der Polymilchsäure einer katalytischen Extrusion über einen Extrusionsweg, um Lactid zu erhalten, wobei das Lactid in seiner Dampfphase extrahiert wird;
b. Kondensieren (13) des Lactiddampfes, um Lactidkristalle zu erhalten;
c. Sammeln (16) der Lactidkristalle;
**dadurch gekennzeichnet, dass** der Extrusionsweg praktisch unendlich ist, wobei der Extrusionsweg in einer Schleife angeordnet ist, in welcher der Abfall umgewälzt wird, und dass das Sammeln in mehreren Fängern erfolgt, die mit dem Extrusionsweg verbunden sind, so dass ein kontinuierlicher Prozess erreicht wird, indem der Schritt des Kondensierens in einigen Fängern und der Schritt des Sammelns in einigen anderen Fängern und durch kontinuierlichen Funktionswechsel zwischen den Fängern durchgeführt wird.

2. Verfahren nach Anspruch 1, wobei das Verfahren vor dem Unterziehen (8) ferner ein Vorkonditionieren (5) des Polymilchsäureabfalls durch Schmelzen des Abfalls bei oder über der Schmelztemperatur der Polymilchsäure und eine Unterdruckextraktion umfasst.

3. Verfahren nach einem der vorhergehenden Ansprüche, wobei mindestens einige Fänger asynchron mit mindestens einigen anderen Fängern sind.

4. Verfahren nach einem der vorhergehenden Ansprüche, wobei vor dem Unterziehen (8) Vorbereitungsschritte durchgeführt werden, wobei die Vorbereitungsschritte Folgendes umfassen:
x. Mahlen (2) des Polymilchsäureabfalls,
y. Waschen und Trocknen (3) des Polymilchsäureabfalls.

5. Verfahren nach einem der vorhergehenden Ansprüche, wobei die katalytische Extrusion bei einer Temperatur zwischen 160.0°C und 300.0°C und unter einem Druck zwischen 10.0 mbar und 0.1 mbar erfolgt.

6. Verfahren nach einem der vorhergehenden Ansprüche, wobei das Verfahren ferner das mechanische Ausstoßen (20) von Nicht-Polysäure-Rückständen umfasst.

7. Verfahren nach einem der vorhergehenden Ansprüche, wobei der Lactiddampf durch erwärmte Rohrleitungen in die mehreren Fänger geführt wird.

8. Verfahren nach Anspruch 7, wobei die Rohrleitungen auf eine Temperatur zwischen 90.0°C und 180.0°C erwärmt werden.

9. Verfahren nach einem der vorhergehenden Ansprüche, wobei die mehreren Fänger auf -10.0°C bis 50.0°C gekühlt werden.

10. Verfahren nach einem der vorhergehenden Ansprüche, wobei das Sammeln der Lactidkristalle erfolgt, indem die mehreren Fänger durch Injektion eines inerten Gases auf Umgebungsdruck gebracht werden.

11. Verfahren nach einem der vorhergehenden Ansprüche, wobei das Verfahren ferner das Bereitstellen eines Propellersystems in den mehreren Fängern umfasst, wobei das Propellersystem den Lactiddampf tangential auf Innenwände der Fänger sprüht.

12. Verfahren nach einem der vorhergehenden Ansprüche, wobei das Verfahren ferner das Bereitstellen mehrerer Schabeklingen in den mehreren Fängern umfasst, wobei die Schabeklingen die Lactidkristalle von den Innenwänden der Fänger schaben.

13. Verfahren nach einem der vorhergehenden Ansprüche, wobei die mehreren Fänger vertikal liegen, wobei der Lactiddampf an der Oberseite der Fänger injiziert wird, wobei sich am Boden der vertikalen Fänger ein Ablassumlenkventil öffnet und die Lactidkristalle abgeschabt werden, und wobei unter den vertikalen Fängern ein hermetischer Beutel platziert ist, in den die abgeschabten Lactidkristalle fallen.

14. Verfahren nach einem der vorhergehenden Ansprüche, wobei das Verfahren ferner das Synchronisieren (19) verschiedener Schritte in dem Verfahren umfasst, so dass ein kontinuierlicher Prozess erhalten wird.

## Revendications

1. Procédé (100) de recyclage de l'acide polylactique dans des déchets d'acide polylactique pour obtenir du lactide pur, ledit procédé comprenant les étapes suivantes:
a. le fait de soumettre (8) l'acide polylactique à une extrusion catalytique sur un chemin d'extrusion pour obtenir du lactide, ledit lactide étant extrait dans sa phase vapeur ;
b. la condensation (13) de la vapeur de lactide pour obtenir des cristaux de lactide;
c. la collecte (16) des cristaux de lactide;
**caractérisé en ce que** le chemin d'extrusion est virtuellement infini, dans lequel le chemin d'extrusion est disposé en boucle dans laquelle les déchets circulent, et **en ce que** la collecte est effectuée dans une pluralité de pièges reliés au chemin d'extrusion, de sorte qu'un processus continu est réalisé en effectuant l'étape de condensation dans certains pièges et l'étape de collecte dans certains autres pièges, et en alternant fonctionnellement de manière continue entre lesdits pièges.

2. Procédé selon la revendication 1, dans lequel le procédé comprend en outre, avant la soumission (8), un préconditionnement (5) des déchets d'acide polylactique par fusion desdits déchets à une température égale ou supérieure à la température de fusion de l'acide polylactique, et une extraction sous vide.

3. Procédé selon l'une quelconque des revendications précédentes, dans lequel au moins certains pièges sont asynchrones avec au moins certains autres pièges.

4. Procédé selon l'une quelconque des revendications précédentes, dans lequel des étapes préliminaires sont effectuées avant la soumission (8), lesdites étapes préliminaires comprenant :
x. le broyage (2) des déchets d'acide polylactique;
y. le lavage et le séchage (3) des déchets d'acide polylactique;

5. Procédé selon l'une quelconque des revendications précédentes, dans lequel l'extrusion catalytique se fait à une température comprise entre 160.0°C et 300.0°C et sous une pression comprise entre 10.0 mbar et 0.1 mbar.

6. Procédé selon l'une quelconque des revendications précédentes, dans lequel le procédé comprend en outre l'éjection mécanique (20) des résidus d'acide non polylactique.

7. Procédé selon l'une quelconque des revendications précédentes, dans lequel la vapeur de lactide est transportée dans la pluralité de pièges par des tuyaux chauffés.

8. Procédé selon la revendication 7, dans lequel les tuyaux sont chauffés à une température comprise entre 90.0°C et 180.0°C.

9. Procédé selon l'une quelconque des revendications précédentes, dans lequel la pluralité de pièges est réfrigérée entre -10.0°C et 50.0°C.

10. Procédé selon l'une quelconque des revendications précédentes, dans lequel la collecte des cristaux de lactide est effectuée en amenant la pluralité de pièges à la pression ambiante par injection d'un gaz inerte.

11. Procédé selon l'une quelconque des revendications précédentes, dans lequel le procédé comprend en outre un système d'hélice dans la pluralité de pièges, ledit système d'hélice projetant la vapeur de lactide sur des parois internes desdits pièges de manière tangentielle.

12. Procédé selon l'une quelconque des revendications précédentes, dans lequel le procédé comprend en outre la fourniture d'une pluralité de lames de raclage dans la pluralité de pièges, lesdites lames de raclage raclant les cristaux de lactide sur les parois internes desdits pièges.

13. Procédé selon l'une quelconque des revendications précédentes, dans lequel la pluralité de pièges est verticale, dans lequel la vapeur de lactide est injectée au sommet desdits pièges, dans lequel, au fond des pièges verticaux, une vanne de dérivation d'évacuation s'ouvre et les cristaux de lactide sont mis au rebut, et dans lequel un sac hermétique est placé sous les pièges verticaux pour que les cristaux de lactide mis au rebut tombent dans le sac.

14. Procédé selon l'une quelconque des revendications précédentes, dans lequel le procédé comprend en outre la synchronisation (19) de différentes étapes du procédé, de manière à obtenir un processus continu.
